(19) **Europäisches Patentamt**

**European Patent Office**

**Office européen des brevets**

(11) Publication number: **0 600 204 A2**

(12) **EUROPEAN PATENT APPLICATION**

(21) Application number: **93116846.2**

(22) Date of filing: **19.10.93**

(51) Int. Cl.5: **G06F 15/72**

(30) Priority: **30.11.92 US 982809**

(43) Date of publication of application:
**08.06.94 Bulletin 94/23**

(84) Designated Contracting States:
**DE FR GB**

(71) Applicant: **INTERNATIONAL BUSINESS
MACHINES CORPORATION
Old Orchard Road
Armonk, N.Y. 10504(US)**

(72) Inventor: **Narayanaswami, Chandrasekhar
11028 Jolliville Road, 350
Austin, Texas 78759(US)**

(74) Representative: **Bravi, Alfredo
c/o IBM SEMEA S.p.A
Direzione Brevetti
MI SEG 024
P.O. Box 137
I-20090 Segrate (Milan) (IT)**

(54) **Method and apparatus for rendering primitives with multiple processors.**

(57) A method for rendering, with multiple processors, a primitive having multiple spans including the steps of assigning at least one span to each processor, each processor calculating endpoints within the primitive for each assigned span, and displaying the primitive. In addition, an apparatus for implementing the method is described.

EP 0 600 204 A2

The present invention relates generally to rendering graphics objects and more specifically to rendering graphics objects with multiple processors.

There are many known techniques for rendering graphics objects. Typically, an object is tesselated into many primitives, usually triangles, each primitive being defined by a set of corner points. These triangles are then individually rendered in a multistep process. Using known Gouraud shading techniques, the edges of each triangle is then traversed and interpolated from the corner points. Subsequently, the triangle is separated into multiple horizontal spans for interpolation of the pixels in the span from the previously interpolated triangle edge points. The interpolated pixels are then stored in a frame buffer for display.

This rendering process is computationally intensive and requires a great deal of processing power. As a result, several techniques have been developed to perform object rendering with parallel processors.

"A Heterogeneous Multiprocessor Graphics System Using Processor-Enhanced Memories" in the July, 1989 issue of Computer Graphics describes a parallel scan conversion technique using a processor per pixel where each processor evaluates a set of linear equations that describe each of the bounding edges of the triangle. By evaluating a linear equation per edge each processor classifies its pixel with each edge of the triangle as to whether it is to the left, right, or on the edge. If a processor's pixel is to the object side of each of the edges of the triangle it is inside the triangle. This brute-force approach achieves poor processor utilization since only processors whose pixels are inside the triangle do any useful computation. The remaining processors do their evaluation but their results are of no use since their pixels are outside the triangle. As a result, as the area of the triangle being rendered becomes smaller, this approach becomes less attractive.

"A Parallel Algorithm for Polygon Rasterization" in the August, 1988 issue of Computer Graphics describes an adaptation of the above technique that does not use a processor per pixel while incorporating z-buffering and color interpolation. For each horizontal span (row) in a triangle to be rendered, the pixels in the span are distributed among the processors. Separate interpolators are used to interpolate color and z values in parallel as is done in many commercially available rasterizers. The endpoints of the spans are determined by traversing the bounding edges of the triangle. For small triangles (50 pixels or less), several of the pixels are common between rasterized pixels of the bounding edges of the triangle and pixels of the horizontal spans. Rasterizing these pixels consume a large percentage of the total computation time for Gouraud shading of 50 pixel triangles (which are commonly used for performance benchmarks). In these cases several pixels of a span may be processed sequentially before a new span is processed in parallel. This reduces the degree of parallelism and efficiency.

The proposed invention, as claimed, has the object to overcome the above drawbacks.

The invention includes a method for rendering, with multiple processors, a primitive having multiple spans including the steps of assigning at least one span to each processor, each processor calculating endpoints within the primitive for each assigned span, and displaying the primitive. In addition, the present invention includes an apparatus for rendering a primitive having multiple spans including multiple processors, apparatus for assigning at least one span to each processor; and each processor including an apparatus for calculating endpoints within the primitive for each assigned span.

A further understanding of the nature and advantages of the present invention may be realized by reference to the remaining portions of the specification and the drawings.

Fig. 1 is a block diagram of a typical digital computer utilized by a preferred embodiment of the invention;

Fig. 2 is a block diagram illustrating the layers of code typically utilized by the host computer and graphics adapter to perform graphics functions;

Fig. 3 is a high level flowchart of a preferred embodiment of the invention;

Fig. 4 is a block diagram of a preferred set of graphics processors utilized by a preferred embodiment of the invention;

Fig. 5 is a flowchart detailing the sorting and slope calculation steps;

Fig. 6 is an illustration of a triangle to be rendered by a preferred embodiment of the invention;

Fig. 7 illustrates the edge pixels traversed by the constrained edge traversal process;

Fig. 8 is a flowchart describing edge traversal; and

Fig. 9 illustrates a raster line through two points.

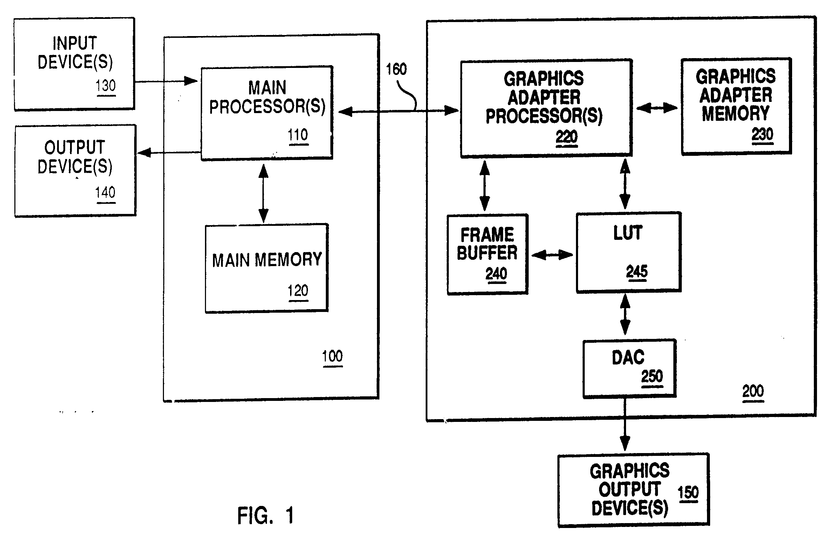

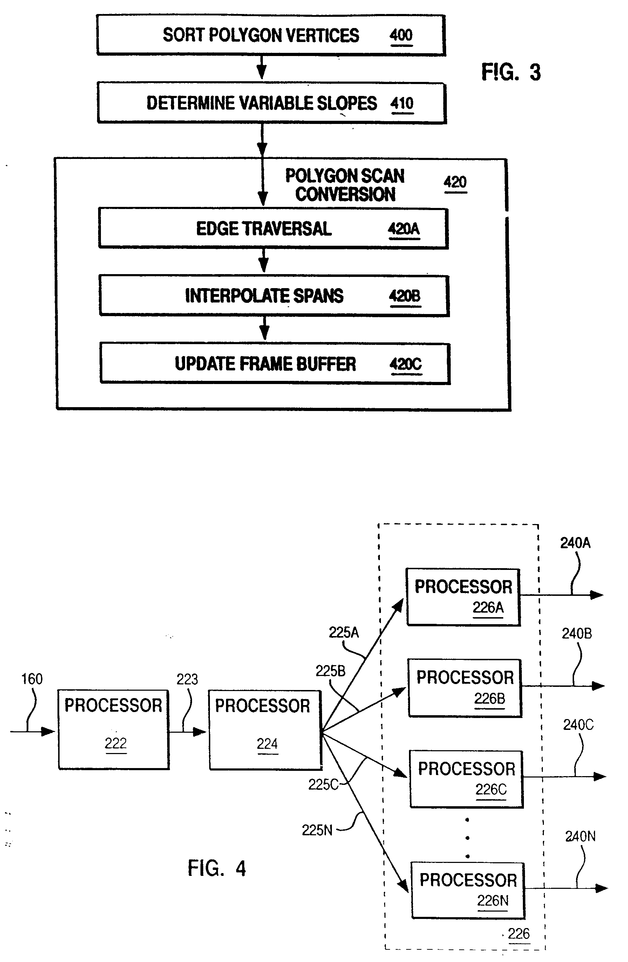

Fig. 1 is a block diagram of a typical digital computer 100 utilized by a preferred embodiment of the invention. The computer includes main processor(s) 110 coupled to a main memory 120, input device(s) 130 and output device(s) 140. Main processor(s) 110 may include a single processor or multiple processors. Input device(s) 130 may include a keyboard, mouse, tablet or other types of input devices. Output device(s) 140 may include a text monitor, plotter or other types of output devices. The main processor may also be coupled to graphics output device(s) 150 such as a graphics display through a graphics adapter 200. Graphics adapter 200 receives instructions regarding graphics from main processors 110 on bus 160. The graphics adapter then executes those instructions with graphics adapter processors 220 coupled to a graphics adapter memory 230. In the preferred embodiment, the graphics processors include multiple interconnected processors as described below with reference to Fig. 3. The graphics processors in the graphics adapter then execute those instructions and updates frame buffer(s) 240 and video look up table (LUT) 245 based on those instructions. Graphic processors 220 may also include specialized rendering hardware for rendering specific types of primitives to be rendered. Frame buffer(s) 240 includes an index value for every pixel to be displayed on the graphics output device. The index value read from the frame buffer is used to read LUT 245 for the actual color to be displayed. A DAC (digital-to-analog converter) 250 converts the digital data stored in the LUT into RGB signals to be provided to the graphics display 150, thereby rendering the desired graphics output from the main processor.

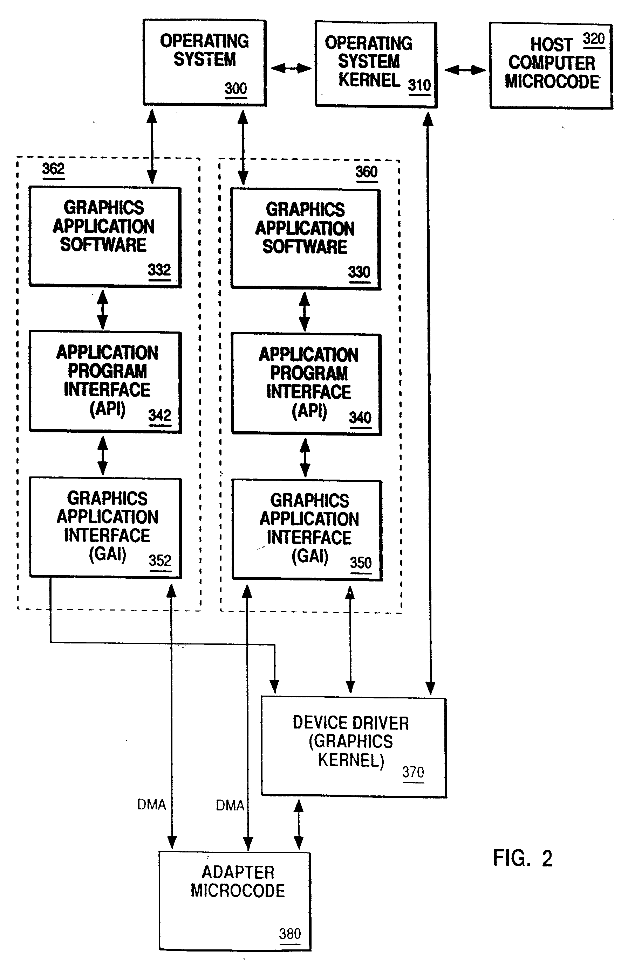

Fig. 2 is a block diagram illustrating the layers of code typically utilized by the host computer and graphics adapter to perform graphics functions such as rendering graphics objects. An operating system 300 such as DOS provides the primary control of the host computer. Coupled to the operating system is an operating system kernel 310 which provides the hardware intensive tasks for the operating system. The operating system kernel communicates directly with the host computer microcode 320. The host computer microcode is the primary instruction set executed by the host computer processor. Coupled to the operating system 300 are graphics applications 330 and 332. This graphics application software can include software packages such as Silicon Graphic's GL, IBM's graPHIGS, MIT's PEX, etc. This software provides the primary functions of two dimensional or three dimensional graphics. Graphics applications 330 and 332 are coupled to graphics application API (application program interface) 340 and 342, respectively. The API provides many of the computationally intensive tasks for the graphics application and provides an interface between the application software and software closer to the graphics hardware such as a device driver for the graphics adapter. For example, API 340 and 342 may communicate with a GAI (graphics application interface) 350 and 352, respectively. The GAI provides an interface between the application API and a graphics adapter device driver 370. In some graphics systems, the API also performs the function of the GAI.

The graphics application, API, and GAI are considered by the operating system and the device driver to be a single process. That is, graphics applications 330 and 332, API 340 and 342, and GAI 350 and 352 are considered by operating system 300 and device driver 370 to be processes 360 and 362, respectively. The processes are identified by the operating system and the device driver by a process identifier (PID) that is assigned to the process by the operating system kernel. Processes 360 and 362 may use the same code that is being executed twice simultaneously, such as two executions of a program in two separate windows. The PID is used to distinguish the separate executions of the same code.

The device driver is a graphics kernel which is an extension of the operating system kernel 310. The graphics kernel communicates directly with microcode of the graphics adapter 380. In many graphics systems, the GAI, or the API if no GAI layer is used, may request direct access from the GAI or API to the adapter microcode by sending an initial request instruction to the device driver. In addition, many graphics systems also allow the adapter microcode to request direct access from the adapter microcode to the GAI or API if no GAI is used by sending an initial request instruction to the device driver. Both processes will hereinafter be referred to as direct memory access (DMA). DMA is typically used when transferring large blocks of data. DMA provides for a quicker transmission of data between the host computer and the adapter by eliminating the need to go through the display driver other than the initial request for the device driver to set up the DMA. In some cases, the adapter microcode utilizes context switching which allows the adapter microcode to replace the current attributes being utilized by the adapter microcode. Context switching is used when the adapter microcode is to receive an instruction from a graphics application that utilizes different attributes than the adapted microcode is currently using. The context switch is typically initiated by the device driver which recognizes the attribute changes.

Blocks 300-340 are software code layers that are typically independent of the type of graphics adapter being utilized. Blocks 350-380 are software code layers that are typically dependent upon the type of graphics adapter being utilized. For example, if a different graphics adapter were to be used by the graphics application software, then a new GAI, graphics kernel and adapter microcode would be needed. In addition, blocks 300-370 reside on and are executed by the host computer. However, the adapter microcode 380 resides on and is executed by the graphics adapter. However, in some cases, the adapter microcode is loaded into the graphics adapter by the host computer during initialization of the graphics adapter.

In typical graphics systems, the user instructs the graphics application to construct an image from a two or three dimensional model. The user first selects the location and type of light sources. The user then instructs the application software to build the desired model from a set of predefined or user defined objects. Each object may include one or more coplanar drawing primitives describing the object. For example, a set of drawing primitives such as many triangles may be used to define the surface of an object. The user then provides a perspective in a window to view the model, thereby defining the desired image. The application software then starts the rendering of the image from the model by sending the drawing primitives describing the objects to the adapter microcode through the API, the GAI, and then the device driver unless DMA is used. The adapter microcode then renders the image on the graphics display by clipping (i.e. not using) those drawing primitives not visible in the window. The adapter microcode then breaks each remaining drawing primitive into visible pixels from the perspective given by the user. The pixels are then loaded into the frame buffer, often with the use of a depth buffer in the case of a three dimensional model. This step is very computationally intensive due to the number of drawing primitives, variables, and pixels involved. The resulting image stored in the frame buffer and displayed on the graphics display typically does not carry the original information such as which drawing primitive or object the pixel was derived from. As a result, the image may need to be rerendered in part or in whole if the window, the user perspective, the model, the lighting, etc. are modified.

In the preferred embodiment, the rendering technique could be utilized in many locations such as the adapter microcode which is close to the adapter frame buffer. This approach would also be relatively quick and fairly easy to implement. In addition, the rendering technique could be applied in the graphics application software wherein the rendered image is also stored in system memory either prior to the image being rendered or subsequently by the graphics adapter passing the data back up to the graphics application software. This approach would be much slower but would allow for utilization of this technique on preexisting graphics adapters. The rendering technique could also be implemented in hardware in the graphics adapter processor. This approach is extremely quick but would probably necessitate specialized hardware. One of ordinary skill in the art can appreciate that the present technique could be applied in many other locations within the host computer or graphics adapter.

Fig. 3 is a high level flowchart of a preferred embodiment of the invention. The below process is described with reference to rendering a triangle although the process can also be applied to other polygons. In a first step 400, the vertices of a triangle to be rendered are first sorted by x and y coordinates. The sort is to help determine how the triangle is to be chopped into separate spans (i.e. which edges of the triangle are on the left side of the triangle). In a second step 410, partial derivatives with respect to x and y of the variables to be interpolated are then determined. The derivatives are to determine the slope of each of the variables with respect to the x and y directions. The slopes are then used in the following interpolation process. In step 420, the triangle is then efficiently chopped into a set of horizontal spans by using a parallel constrained edge traversal technique in substep 420A, the spans are then interpolated in substep 420B, and the frame buffer is updated in substep 420C. This process is generically called scan conversion. As will be shown below, the preferred constrained edge traversal provides that for each span there is only one common pixel between the raster representation of a bounding edge of the triangle and the span. This increases the number of pixels processed in the spans rather than at the edges. The spans are preferably processed by processors in an interleaved fashion for good load-balancing. This preferred process is described in greater detail below.

Fig. 4 is a block diagram of a preferred set of graphics processors utilized by a preferred embodiment of the invention. A first processor 222 receives input on bus 160 to render a polygon such as a triangle. Processor 222 then performs step 400 described above by sorting the vertices by their x and y coordinates and passes this information onto processor 224 on data line 223. Processor 224 then performs step 410 described above by calculating the slope of the variables to be interpolated. In alternative embodiments, processor 224 may include several processors in parallel to perform the slope calculations in parallel. Processor 224 then passes this information on to processors 226 across data lines 225A to 225N. In a alternative embodiment, a dispatching circuit or processor may be used to between processor 224 and processors 226 to dispatch and allocate the data to the various processors. Processors 226, including processors 226A-226N, then perform step 420 described above by performing the edge traversal and pixel interpolation in parallel. The number of processors preferred for processors 226 is in the range of 3-5 for software implementations of the preferred embodiment of the present invention. However, in a hardware implementation, certain phases may chose to use fewer processors to reduce costs. Similarly, one may choose to use more processors (5-20) because of the data expansion that takes place when converting from three vertices to several pixels. In addition, each of the processors may include several pipelined or parallel processors in alternative embodiments. Processors 226A-226N then forward the interpolated pixels on to the frame buffer on data lines 240A-240N.

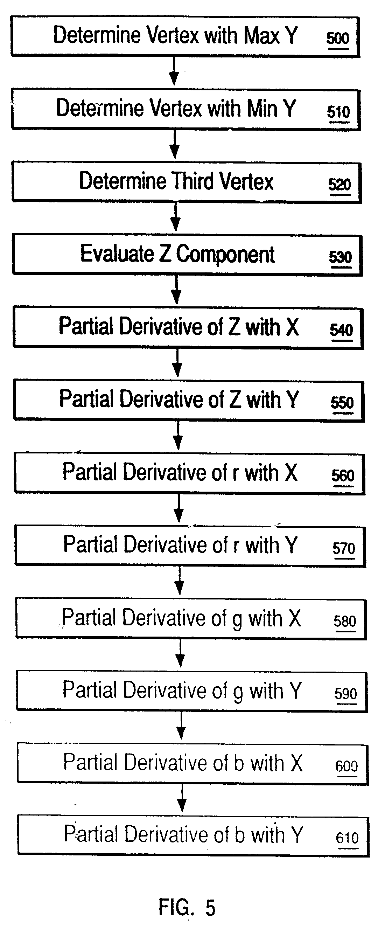

Fig. 5 is a flowchart detailing the sorting and slope calculation steps described above. Sorting and slope calculations may be performed in parallel. The only dependency between the steps is that signs of the slopes may need to be reversed depending on the result of the sorting technique. This creates a labeling for the vertices of the triangle depending on the geometry of the triangle. This also ensures that the result of the scan conversion of the triangle is independent of the order in which the vertices are specified to this technique, thereby simplifying the scan conversion process.

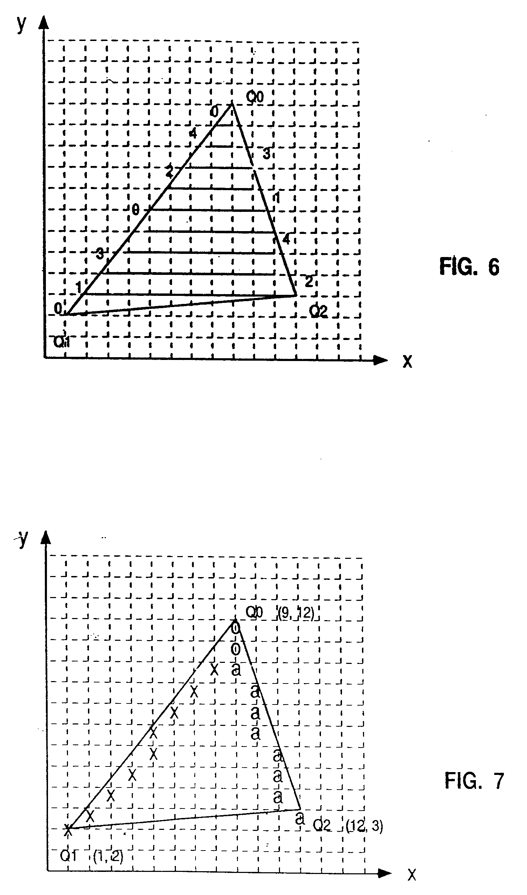

The preferred embodiment of the invention is now described with reference to a triangle illustrated in Fig. 6. In this process, the edge Q0Q1 with the maximum y separation is determined. Q0 is the vertex with the maximum y coordinate. Ties between vertices are broken in a consistent manner depending on the x coordinate. This edge is used as the interpolating edge of the triangle and to originate horizontal spans. Color and z values are interpolated along this edge. The other two edges are just used to determine the other endpoints of the spans.

This process may be performed sequentially with a single processor or parallel processors. To do this sort in parallel three processors may be used in parallel in the processor 222 described above with reference to Fig. 4. In a first step 500, the first processor determines the vertex with the maximum y coordinate by comparing the coordinates of all three vertices. In a second step 510, which may be performed concurrently with step 500, the second processor determines the vertex with the minimum y coordinate by comparing the coordinates of all three vertices. In a third step 520, which may be performed concurrently with steps 500 and 510, the third processor determines the vertex that does not match those determined by the other two processors. The determination of whether Q2 is to the left or right of Q0Q1 is done in step 530 by evaluating the z component of the cross product of vector(Q0Q1) and vector(Q0Q2). This concludes the sort portion of the present invention.

In order to linearly interpolate a variable z (typically depth in three dimensional graphics applications) across the triangle using incremental techniques, the rates of change of z with x and y are calculated in steps 540 and 550. That is, the partial derivative of z with respect to x, hereinafter described as partial (z) / partial (x), and the partial derivative of z with respect to y, herein described as partial (z) / partial (y), are calculated in steps 540 and 550.

Then z(x,y) = z(0,0) + [x * partial (z) / partial (x)] + [y * partial (z) / partial (y)] Similar terms need to be determined for r, g, and b in steps 560 to 610.

Let Q0 = (x0, y0, z0), Q1 = (x1, y1, z1), and Q2 = (x2, y2, z2) be the vertices of the triangle after the sorting process. The equation of the plane in which the triangle Q0Q1Q2 lies is Ax + By + Cz + D = 0. This can be written as:

$$
\begin{vmatrix}
x & y & z & 1 \\
x0 & y0 & z0 & 1 \\
x1 & y1 & z1 & 1 \\
x2 & y2 & z2 & 1
\end{vmatrix} = 0
$$

Then the direction cosines (not normalized) for the plane are given by the following equations:

A = (z1-z0)(y1-y2) - (z1-z2)(y1-y0)
B = (z1-z2)(x1-x0) - (z1-z0)(x1-x2)
C = (x1-x0)(y1-y2) - (x1-x2)(y1-y0)

Note that D does not have to be evaluated in the technique.
The slopes are given as

(partial (z))/(partial (x)) = - A/C
(partial (z))/(partial (y)) = - B/C

Slope calculation for other parameters such as r, g, b values, etc., is similar. Note that the value of C is the same for z, r, g, and b slope calculation. Sufficient bits of precision are maintained in the slopes so that error accumulated in interpolation is not noticeable. For example, for a 4K X 4K screen 17 bits of fraction are sufficient. As opposed to the Gonzalez-Liang technique, the preferred embodiment does not use Bresenham type interpolation for color and z interpolation and thereby simplifies the hardware necessary while maintaining the same level of accuracy.

5

There are several simple ways to parallelize the above computations. One is to distribute the computations for z, r, g, and b among the processors. Another approach is to distribute the computations of A's and B's among processors. Depending on the time taken to calculate the A's and B's (multiplies and adds) and the time taken to calculate the slopes (divides), pipelining the computations may be an attractive alternative. With 3 to 5 processors (3-5), uniform load-balancing can be achieved with each of these alternatives.

There are three main steps in the scan conversion process. They are edge traversal, span interpolation, and update frame buffer updates. When pixels whose centers are exactly on the edges of adjacent triangles are drawn twice (once for each triangle) in an additive (accumulation buffer) or blending (alpha blending) mode undesirable results may result. In order to avoid visiting such pixels twice, any consistent procedure for making ownership of such pixels mutually exclusive between adjacent triangles may be used. One such procedure is that if the pixel is on the left edge of the triangle (bottom edge, if the edge cannot be classified as left or right), then it is drawn.

To be efficient, the preference is to distribute the computations for the pixels in the triangle evenly among the processors. Let Delta(max)y = Q0(y) - Q1(y), i.e., the number of scan lines in the triangle and let p be the number of processors. One alternative is to chop the triangle into p horizontal strips. The strips can then be distributed among the processors for parallelization. However, this approach may not distribute the load evenly because some processors may receive longer strips than other processors. Fig. 6 illustrates that a preferred approach is to chop the triangle into Delta(max) y strips, each one pixel high, and distribute them among the p processors in an interleaved fashion (in Fig. 6 the triangle is 10 pixels high and the spans are interleaved among 5 processors which are indicated beside each span of the triangle). Note that if p > Delta(max) y the two approaches become similar. However, often the number of processors is less than Delta(max) y because of hardware costs. As the size of the triangle increases, the interleaved distribution of spans to the processors achieves better load-balancing. A large right triangle is a good example where the interleaved approach is very effective.

Constrained edge-traversal is a parallel technique to chop the triangle into 1-pixel high strips for allocation to parallel processors. The constraint is that while calculating a boundary edge of the triangle, each of the consecutive pixels should differ in the y coordinate by one. By doing this we also ensure that the y coordinate is the same for the pixels calculated by the processors on both the left and right bounding edges of each span, thereby generating spans in a synchronized fashion. Fig. 7 illustrates the pixels visited by the constrained edge walker for the edges Q0Q1 and Q0Q2. The o's and x's indicate pixels visited by the edge Q0Q1. The o's and the a's indicate pixels visited by the edge Q0Q2. The o's are the pixels that are common between the edges.

Constrained edge-traversal has the following additional advantage. The Bresenham or DDA techniques typically calculates pixels outside the triangle. The Bresenham and DDA techniques are directed to best fit a line rather than to render multidimensional primitives. This increases the number of pixels calculated and also calculates pixels not needed for rendering the triangle. However, in this case the constrained technique visits only Q1 and Q2 and saves traversing a set of pixels outside the triangle. In general the Bresenham or DDA technique from points (x0, y0) to (x1, y1) visits a maximum of (!x1 - x0!, !y1 - y0!) pixels and takes a maximum of T time per pixel times (!x1 - x0!,!y1 - y0!) time. Thus the time taken depends on the longer of the projections of the line on the x and y axes. The constrained technique visits only (!y1 - y0!) pixels and takes T time per pixel times (!y1 - y0!) time and therefore visits (!x1 - x0! - !y1 - y0!) fewer pixels for lines with slope less than one. For lines with slopes less than one, some of the other (!x1 - x0! - !y1 - y0!) pixels are processed in the spans and the remaining are not processed.

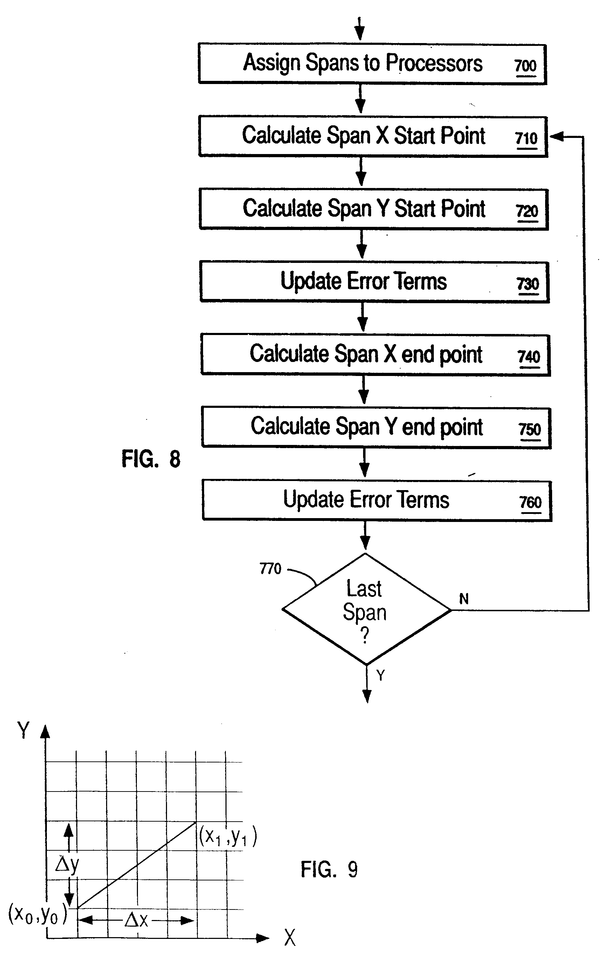

Fig. 8 is a flowchart describing edge traversal. In a first step 700, the spans are assigned to the processors in an interleaved fashion. That is, for N processors, each processor will be assigned every Nth span offset from the spans assigned to the other processors. The remaining steps in this figure are processed by each processor in parallel for spans assigned to those processors. In a steps 710 and 720, the start point for a span is calculated using the vertices, any previous start points calculated by that processor, and error terms. The start point is preferably constrained to be within the boundary of the primitive. In step 730, the error terms and color values are updated to reflect the calculation on the start point. In steps 740 and 750, the end point for a span is calculated using the vertices, any previous end points calculated by that processor, and error terms. The end point is also preferably constrained to be within the boundary of the primitive. In step 760, the error terms and color values are updated to reflect the calculation of the end point for this span. In step 770, it is determined whether this is the last span to be calculated for this processor. If not, then processing returns to step 710 for the next span. If yes, then processing continues to interpolation and frame buffer updates.

The following definitions will be used in the description of the present invention. All arithmetic operations and variables are preferably in the integer (fixed point) domain.

p = (number of processors)
(x0, y0) = (starting point of line)
(x1, y1) = (ending point of line)
Delta x = x1 - x0 > = 0 (solution to other cases described below)
Delta y = y1 - y0 > 0 (solution to other cases described below)
Fig. 9 illustrates a raster line through (x0, y0) and (x1, y1). The equation of this line is:

```
(y - y0)/(x - x0) = (Delta y/Delta x) which yields

x = F(y)

   = y*[(Delta x)/(Delta y)] + x0 - y0*(Delta x)/(Delta y)
```

$x_j(i)$ and $y_j(i)$ denote the x and y coordinates for the ith processor in the jth iteration. The starting iteration is the 0th iteration.

To generate pixels that are either on the line or to the right of the line the following equations are preferably used.

```
y_j(i) = y0 + pj + i
x_j(i) = truncate[f(y_j(i))] + 1 if remainder > 0
       = x0 + [((pj + i)Delta x)/( Delta y)]
```

To generate pixels that are either on the line or to the left of the line the following equations are preferably used.

```
y_j(i) = y0 + pj + i
x_j(i) = truncate[f(y_j(i))]
       = x0 + ((pj + i)Delta x)/(Delta y)
```

Pixels are either generated on the line or to the right of the line. As can be seen below, a comparator value is used to indicate whether the pixels are to the left of the line, to left or on the line, etc.

Let p(Delta x) = a(Delta y) + b where b > = 0 and i(Delta x) = c(i)(Delta y) + d(i) where d(i) > = 0. Therefore,

((pj + i)(Delta x))/(Delta y)
= (pj(Delta x))/(Delta y) + (i(Delta x))/(Delta y)
= aj + (bj)/(Delta y) + c(i) + (d(i))/(Delta y)
= aj + c(i) + (bj)/(Delta y) + (d(i))/(Delta y)
= aj + c(i) + (bj+d(i))/(Delta y)

Therefore

$y_j(i)$ = y0 + pj + i
$x_j(i)$ = x0 + aj + c(i) + (bj + d(i))/(Delta y)

To compute the fraction, (bj+d(i))/(Delta y) in successive iterations (varying j), a standard approach for sequential line drawing in computer graphics is utilized. This technique maintains the result as an integer and fractional part. The fractional part has a numerator and denominator. Initially the numerator is less than or equal to zero. To compute the result in the next iteration, b is first added to the numerator of the fractional part. This numerator is then compared with zero. If the numerator is still less that than or equal to zero no action is taken. If the numerator is then greater than zero the integer part is incremented by one and the denominator (Delta y) is subtracted from the numerator. This way the numerator is always less than zero. Computation of the fraction, [(bj+d(i))/(Delta y)] in successive iterations is similar to above but in this case the numerator is initially between zero and the denominator (Delta y) and the comparison is made with the denominator (Delta y) instead of zero in the above description.

Let $e_{(0)}(i) = d(i)$. By definition $0 <= e_{(0)}(i) < $ Delta y. The pixel visited by the ith processor in the 0th iteration is given by:

y0(i) = y0 + i
x0(i) = x0 + c(i) + n1

where

n1 = 1 if $e_{(0)}(i) > 0$ or
n1 = 0 if $e_{(0)}(i) <= 0$.

The following recurrence relations can now be defined for j > 0:

$$y_j(i) = y_{(j-1)}(i) + p$$
$$x_j(i) = x_{(j-1)}(i) + a + (bj + d(i))/(\text{Delta y})$$
$$\phantom{x_j(i)} - (b(j-1) + d(i))/(\text{Delta y})$$
$$\phantom{x_j(i)} = x_{(j-1)}(i) + a + n2$$

where

n2 = 1 if $(e_{(j-1)}(i) + b) > 0$

or

n2 = 0 if $(e_{(j-1)}(i) + b) <= 0$
ej(i) = e(j-1)(i) + b - n3

where

n3 = Delta y if (e(j-1)(i) + b) > 0

or

n3 = 0 if (e(j-1)(i) + b) <= 0

For any line each processor will visit either (Delta y + 1) / p or (Delta y + 1) / p pixels. Since the difference between the number of pixels visited by any two processors is one, the work load is evenly balanced among the processors.

Once the two endpoints of the spans and the color and z values at the starts of the spans are known, the color and z values for pixels in the spans need to be determined by simple interpolation. There are two simple ways in which this phase can be parallelized. One option is to distribute spans among the processors in an interleaved fashion such that vertically contiguous spans are handled by different processors (see Fig. 6). Another option is to distribute the pixels among processors in an interleaved fashion such that horizontally contiguous pixels are handled by different processors. The choice between the two depends on how the memory is organized, i.e., whether spatially contiguous pixels are in different memory modules or not and on the number of processors available for this stage. If only a small number of processors are available the first option is preferred. If sufficient number of processors are available both methods may be combined or the second method may be used.

Graphics frame-buffer memories are organized to facilitate simultaneous access of a block of adjacent pixels. To make good use of available memory, current graphics adapters and applications (e.g., 8 bit mode) prefer to keep the r, g, and b values in the same bank of memory and neighboring pixels in xy space in different banks. This organization allows neighboring pixels in xy space to be written in parallel. By dividing xy space among the processors our approach generates several neighboring pixels at once. Therefore several of the pixels generated by the processors can be written into the frame buffer in parallel.

8

Tables 1-4 include pseudocode for rendering a triangle including shading. The pseudocode is written such that it may be executed by a single processor but the pseudocode is intended for execution by multiple processors. In addition, the pseudocode is written for rendering triangles although other polygons or primitives may be rendered using these techniques. Table 1 is directed to the higher level processing where the triangle is shaded and rendered. Certain variables are initialized. Vertices for the triangle are obtained and sorted as described herein. Various slopes are calculated with respect to X and Y for shading. Variables for each edge of the triangle are then computed. This step can be performed by separate processors. The pseudocode assumes that delta X is greater than delta Y. If not, then the variables may be exchanged for the below pseudocode. Then variables for each processor are then calculated. This step can also be performed individually by each processor. The endpoints for each span are then calculated. Again, this step may be performed by multiple processors. Finally, the pixels within the spans are interpolated and loaded into a frame buffer.

```
Table 1 Pseudocode for Triangle Processing:
set NBR_PROCS = number of processors to handle polygon scan
        conversion;
set PID = processor identification number for each processor


from 0 to NBR_PROCS - 1;
obtain vertices for triangle including depth and color
        information;
sort vertices to determine the vertices with the maximum Y
        value and the minimum Y value;
perform slope calculations of each variable to be
        interpolated with respect to X and Y;
for J = 1 to 3
        initialize_triangle_edge_variables for Jth edge of
                triangle where edge is (X0(J),Y0(J)) to
                (X1(J),Y1(J));
next J;
For K = 0 to NBR_PROCS - 1
        setup_processor_variables for Kth processor;
next K;
while more spans for processor
        set LR = left edge value from 1 to 3;
        get_edge_of_span (X(LR), Y(LR));
        set LR = right edge value from 1 to 3;
        get_edge_of_span (X(LR), Y(LR));
send left and right edges to span processors for
        interpolation;
update frame buffer;
end processing;
```

Table 2 is pseudocode directed to initializing variables for each triangle edge. The vertical and horizontal difference for each edge is determined as well as the direction of those differences. The direction is used to determine a value called CVAL describing which direction the line is directed. Of course, one may utilize alternative methods to handle edges running in various directions. Variables A and B are directed to tracking movement in the X and Y direction for spans when jumping from a previous span for each processor due to interleaving of the spans. The sign function utilized below provides a -1, 0 or +1 for a negative, zero, or positive input to the function.

```
Table 2 Pseudocode for Initializing Triangle Variables:
initialize_triangle_edge_variables:
DELTA_X(J) = absolute value (X1(J)-X0(J));
SIGN_DELTA_X(J) = sign (X1(J)-X0(J));
DELTA_Y(J) = absolute value (Y1(J)-Y0(J));
SIGN_DELTA_X(J) = sign (Y1(J)-Y0(J));
if SIGN_DELTA_X(J) <> 0
        A(J) = [NBR_PROCS*DELTA_X(J)] / DELTA_Y(J)
        B(J) = [NBR_PROCS*DELTA_X(J)] - [A(J)*DELTA_Y(J)];

if edge = left edge
        if (SIGN_DELTA_X(J) > 0)
            CVAL(J) = DELTA_Y(J) - 1
        else CVAL(J) = 0
else
        If SIGN_DELTA_X(J) > 0
            CVAL(J) = 0
        else CVAL(J) = DELTA_Y(J) -1;
return;
```

Table 3 is directed to initializing the variables for each processor including error terms and starting points.

```
Table 3 Pseudocode for Setup of Processor Variables:
setup_processor_variables:
for L= 1 to 3;
C(K,L) = (K * DELTA_X(L))/DELTA_Y(L);
D(K,L) = (K * DELTA_X(L)) - (C(K,L) * DELTA_Y(L));
E(K,L) = D(K,L);
X_START(K,L) = X0(L) + SIGN_DELTA_X(L) * C(K,L);
if E(K,L) > CVAL(L)
        X_START(K,L) = X_START(K,L) + SIGN_DELTA_X(L)
        E(K,L) = E(K,L) - DELTA_Y(L);
Y_START(K,L) = Y0(L) + SIGN_DELTA_Y(L) * K;
next L;
return;
```

Table 4 is directed to calculating the edge values for each span.

```
Table 4 Pseudocode for Primitive Processing:
get_edge_of_span:
If first time for this edge
        X(PID,LR) = X_START(PID,LR)
        Y(PID,LR) = Y_START(PID,LR)
        I(PID,LR) = DELTA_Y(LR);
if I(PID,LR) < DELTA_Y(LR)
        INCR = SIGN_DELTA_X(LR) * A(LR)
        E(PID,LR) = E(PID,LR) + B(LR)
        If (E(PID,LR) > CVAL(LR)
                INCR = INCR + SIGN_DELTA_X(LR)
                E(PID,LR) = E(PID,LR) - DELTA_Y(LR)
        X(PID,LR) = X(PID,LR) + INCR
        Y(PID,LR) = Y(PID,LR)+(SIGN_DELTA_Y(LR)*NBR_PROCS)
        I(PID,LR) = I(PID,LR) + NBR_PROCS
        < if edge LR = edge Q0Q1, update color values;
else
        set LR = new edge bounding the span;
return;
```

An efficient parallel technique for linear interpolation of variables over a triangle has been described. The constrained edge traversal technique has been described for introducing additional parallelism not present in earlier solutions.

The technique can be extended to rational linear interpolations where the numerator and denominator need

EP 0 600 204 A2

to be interpolated linearly. Though only Gouraud shading was examined in the description, the results of our technique can be used for texture mapping, alphablending, etc. Similarly it is possible to address the issue of subpixel positioning of vertices of the triangle.

**Claims**

1. A method for rendering, with a plurality of processors, a primitive having a plurality of spans comprising the steps of:
   assigning at least one span to each processor;
   each processor calculating endpoints within the primitive for each assigned span; and
   displaying the primitive.

2. The method of Claim 1 wherein the step of assigning includes interleaving the spans assigned to the processors.

3. The method of Claim 1 or 2 wherein the step of calculating includes calculating span endpoints as an increment from a previously calculated endpoint.

4. The method of Claim 3 further comprising a step of interpolating values for points between calculated endpoints.

5. The method of Claim 1, 2, 3 or 4 further comprising a step of updating a frame buffer with interpolated values.

6. An apparatus for rendering a primitive having a plurality of spans comprising:
   a plurality of processors;
   means for assigning at least one span to each processor; and
   each processor including means for calculating endpoints within the primitive for each assigned span.

7. The apparatus of Claim 6 wherein the means for assigning includes means for interleaving the spans assigned to the processors.

8. The apparatus of Claim 6 or 7 wherein the means for calculating includes means for calculating span endpoints as an increment from a previously calculated endpoint.

9. The apparatus of Claim 8 further comprising means for interpolating values for points between calculated endpoints.

10. The apparatus of Claim 6, 7, 8 or 9 further comprising means for updating a frame buffer with interpolated values.

11. The apparatus of Claim 6, 7, 8, 9 or 10 wherein the apparatus is a data processing system comprising:
    a processor for processing data;
    a memory for storing data to be processed; and
    an adapter coupled to the processor and memory for performing graphics functions, the adapter including:
    said plurality of graphics processors;
    said means for assigning; and
    each graphics processor including said means for calculating.

12

FIG. 1

FIG. 2

```
┌─────────────────────────────────────────┐
│        SORT POLYGON VERTICES      400    │
└─────────────────────────────────────────┘
                    │
                    ▼                            FIG. 3
┌─────────────────────────────────────────┐
│    DETERMINE VARIABLE SLOPES   410       │
└─────────────────────────────────────────┘
                    │
                    ▼
┌───────────────────────────────────────────────────┐
│                     POLYGON SCAN        420        │
│                     CONVERSION                      │
│   ┌─────────────────────────────────────────┐      │
│   │      EDGE TRAVERSAL          420A        │      │
│   └─────────────────────────────────────────┘      │
│                    │                               │
│                    ▼                               │
│   ┌─────────────────────────────────────────┐      │
│   │      INTERPOLATE SPANS       420B        │      │
│   └─────────────────────────────────────────┘      │
│                    │                               │
│                    ▼                               │
│   ┌─────────────────────────────────────────┐      │
│   │      UPDATE FRAME BUFFER     420C        │      │
│   └─────────────────────────────────────────┘      │
└───────────────────────────────────────────────────┘
```

```
                                              ┌──────────────┐
                                              │  PROCESSOR   │ ──── 240A ──►
                                              │    226A      │
                                              └──────────────┘
                                       225A
                                       225B   ┌──────────────┐
                                              │  PROCESSOR   │ ──── 240B ──►
                                              │    226B      │
                                              └──────────────┘
  160          223                            ┌──────────────┐
   ┌──────────┐      ┌──────────┐             │  PROCESSOR   │ ──── 240C ──►
──►│ PROCESSOR│ ────►│ PROCESSOR│────┐        │    226C      │
   │    222   │      │    224   │    │        └──────────────┘
   └──────────┘      └──────────┘  225C              ·
                                                     ·
                                   225N        ┌──────────────┐
                                               │  PROCESSOR   │ ──── 240N ──►
                                               │    226N      │
                                               └──────────────┘
                                                          226
```

FIG. 4

FIG. 5

FIG. 6

FIG. 7

| Assign Spans to Processors | 700 |

| Calculate Span X Start Point | 710 |

| Calculate Span Y Start Point | 720 |

| Update Error Terms | 730 |

| Calculate Span X end point | 740 |

| Calculate Span Y end point | 750 |

FIG. 8

| Update Error Terms | 760 |

770 — Last Span ? — N

Y

FIG. 9

$(x_1, y_1)$

$\Delta y$

$(x_0, y_0)$

$\Delta x$